# EUROPEAN PATENT APPLICATION

(11) **EP 2 415 346 A2**
(43) Date of publication of application: **08.02.2012**
(21) Application number: 10758137.3
(22) Date of filing: 31.03.2010
(51) Int. Cl.: A01M 1/10

(54) **TRAP FOR INSECTS**

(30) Priority: 02.04.2009 CL 8012009
(71) Applicant: Jimenez Olmo, Ricardo, Santiago 8320176 (CL)
(72) Inventor: Jimenez Olmo, Ricardo, Santiago 8320176 (CL)
(74) Representative: Carvajal y Urquijo, Isabel
(86) International application number: PCT/IB2010/051410
(87) International publication number: WO 2010/113128

(57) **Abstract**

A trap for capturing flying insects that provides in one single device the following functional advantages: flexibility of application, ease of operation and effectiveness of capture; wherein said trap is made up of three components: (a) a hollow vertical duct of conical or cylindrical shape and with a preferably circular section, that is perforated or slotted in its upper end; (b) an upper container of conical or cylindrical shape and with a preferably circular section, equipped with a lid; and (c) a lidless lower container, of conical or cylindrical shape and with a preferably circular section; said components are joined together so that the geometrical axis of the three components coincides and the vertical duct interconnects the upper container with the lower one, extending entirely through the upper container.

## Description

A Trap for Capturing Flying Insects in general, and for the yellow jacket wasp (or vespula germanica) in particular. The trap is made up of two independent and separable containers, interconnected by a vertical duct, which provides in one single device the following functional advantages: flexibility of application, ease of operation and effectiveness of capture.

There are various types of traps for flying insects, all of which present at least one of the following deficiencies:
- They use the same container or chamber for placing the lure and for confining the insect, which leads to losing the lure when the dead insects are removed from the trap.
- The lure is exposed to the insects entering the trap, thus reducing its duration because it is ingested by the insects.
- The traps restrict the consistency of the lure to one or another form: liquid or solid (meaty).
- They do not allow an exterminating liquid to be incorporated in order to kill the insects more quickly; this also affects the efficiency of the trap by giving the insects more time to escape.
- They do not make it easy for insects to enter the trap, particularly in terms of providing a handy surface for insects to alight on prior to entering (when the access holes are on a vertical plane or in the lower surface of the trap) and providing a wide entry section to the trap, all of which reduces its effectiveness.
- They do not make it difficult for insects to get out of the trap, allowing a large number of insects that enter the trap to exit it.
- They are complex to handle in terms of replacing the bait and/or removing dead insects.

The most important documents among those that approximate the state of the art of this invention are as follows:
Patent GB298750, applied for in 1928, that discloses a trap for wasps and similar insects made up of a conical metal top arranged to rest on the rim of a tin or a bottle. The top is perforated and its apex severed. A tray containing the lure is suspended from the top and remains in an intermediate area between the metal top and the surface of the exterminating liquid that can be placed inside the bottle.

The fundamental difference between this and the proposed invention is that, because this trap is made up of a single-piece container, the lure is exposed to the insects, thereby reducing its durability and making handling difficult.

Patent W02001093673A2, applied for in 2001, discloses an insect trap that has a lid or [upper] housing [member] that covers a lower housing member and an intermediate housing member that is placed between the upper and lower housing members. When the lower housing member connects with the intermediate housing member, a chamber is formed where insects can access the bait and remain trapped there, or they can be killed through contact with an exterminating agent, when applicable. The upper housing member or top can connect to the intermediate member by means of various projections allowing a space to form between the upper and intermediate members, where the trap chamber can be accessed freely by the insects. The upper housing member can also be adjusted toward the intermediate housing member, either by placing it in a directly adjacent position or by closing the opening between the upper and intermediate members, thus impeding entry to or exit from the trap chamber.

The fundamental difference between this and the proposed invention is that, again, the trap is made up of a single-piece container (or chamber), and therefore the lure is exposed to the insects, thereby reducing its durability and making handling difficult. An additional difficulty in this case is that by not having a different container in which to place the lure, it is forcibly lost when the dead insects are removed and restricts the use of an exterminating liquid aside from the lure, i.e., it would only be possible for a liquid lure to act as an exterminator by drowning the insects.

The present invention proposes a trap of simple construction (industrial or artisanal; reusable or disposable) that remedies all the deficiencies detected in the existing traps. By being made up of two independent and separable containers interconnected by a vertical duct, it provides in one single device the following functional advantages:
1. Flexibility of application.
   - It allows the use of lures of any consistency: liquid, oily, doughy or solid (meaty).
   - It can be used for different species of flying insects.
2. Ease of operation.
   - Allows for independent handling when replacing the lure and removing the insects, thus affording a more simple and speedy operation.
   - For the renewal of liquid lures, the substance can be injected directly without need to disassemble the trap.
   - Allows dead insects to be removed without losing or altering the lure.
   - The lure is not exposed to insects entering the trap, thus avoiding lure loss through ingestion.
3. Effectiveness of capture
   - It provides an upper flat horizontal surface for the insects to alight on prior to entering the trap and on the same plane as the access hole, thus easing and expediting their entry.
   - The insects enter the trap in a horizontal direction and then descend aided by gravity down the vertical duct.
   - The only way to exit the trap is to climb up the same vertical entry duct without any prior flat support surface to stand on, which is very difficult for most insects.
   - It allows an exterminating liquid to be placed in the insect confining container, thus killing them more quickly.

### - Detailed Description of the Invention

The proposed trap is provided by joining together only three components, preferably made of plastic material, rigid or flexible, disposable or recyclable:

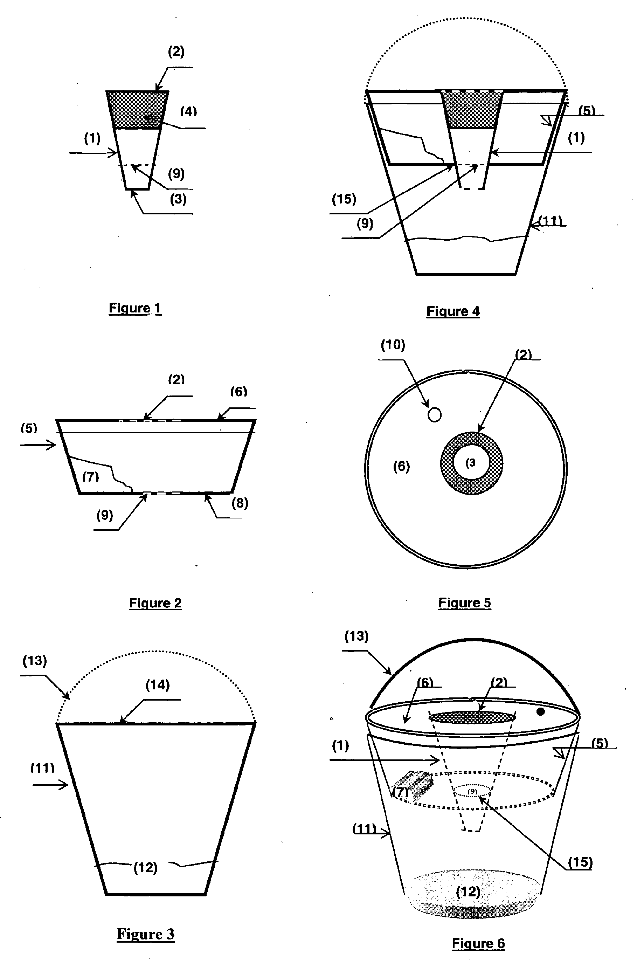

### Component 1: Vertical duct for entry of insects (Figure 1)

This is a hollow duct that may be conical (funnel) or cylindrical (tube) in shape and with a section of any geometrical form, preferably circular. The duct shall have perforations or slots in its upper part to allow the scent of the lure to reach the outside and, at the same time, prevent insects from coming into contact with the lure. It is a hollow cylinder or cone that has the following characteristics:
- The perforations or slots should not allow insects to pass through them; this is achieved using smaller diameters or thicknesses than the minimum width of the insects that are to be captured.
- The free (hollow) section of the duct should allow the entry and passage of insects along its entire length. If conical in shape, the widest section shall always be placed toward the upper part of the trap and the narrowest section toward the lower part, in order to expedite the entry of the insects into the trap and hinder their exit.
- The length of the duct is conditioned by the height of the upper container (component 2), and shall be of equal or greater height than the container. A length greater than the height of the upper container is suggested, because it will make any eventual escape of insects from the trap even more difficult. The length of the perforated or slotted area shall be less than the height of the upper container, in order to allow the container to hold liquid lures.

Figure 1 represents a frontal section of the vertical duct (1) allowing insects to enter the trap, which is represented in conical form but can also be cylindrical. The widest section of the duct (2) is placed toward the upper end and the narrowest section (3) is placed toward the lower end of the trap. The duct is slotted or perforated in its upper end (4). The length of the duct shall be of equal or greater height than the upper container (component 2).

### Component 2: Upper container for lures (Figure 2)

This is a lidded container where the lure is placed. It is a cylindrical or conical container with a section of any geometrical form, preferably circular, equipped with a pressure or screw lid. The centre of the lid and the bottom of the container shall bear perforations of equal size and shape as the external section of the vertical ducts at the points where both components intersect.

Figure 2 represents a frontal section of the upper container (5) equipped with a lid (6) in which the lure (7) is placed. This is represented in conical form but can also be cylindrical. The centre of the lid has a perforation of the same size and shape as the upper external section of the vertical duct (2). The centre of the bottom of the container (8) shall have a perforation of the same size and shape as the lower external section of the vertical duct at the height of the container (9). In addition, the lid has a small orifice (10) that does not allow the entry of insects but makes it possible to introduce a liquid lure with a syringe or dropper without need to remove the lid of the container.

### Component 3: Lower container for confining insects (Figure 3)

This is a lidless container that will constitute the confining area for the insects and may also contain an exterminating liquid to kill them more quickly. The container is cylindrical or conical and allows a good fit to be achieved with the upper container (component 2). This means that both containers, upper and lower, shall have a section of the same shape, preferably circular. Characteristics:
- It is advisable for the container to be transparent in order to view the trapped insects and check the level of the exterminating liquid.
- It should have a looped handle on its upper part to allow it to be suspended from a hook.

Figure 3 represents a frontal section of the lower container (11) provided for confining the insects and containing the exterminating liquid (12). It is represented in conical form but can also be cylindrical. It also has a looped handle (13) that allows it to be suspended. The upper section of the lower container (14) shall have the same shape as the section of the bottom of the upper container (8) in order to allow a good match and fit between the two containers.

### Joining of components: Trap to capture flying insects (Figures 4, 5 and 6)

The trap is assembled by joining three components together: there should be a solid (non-removable) fit between the vertical duct and the bottom of the upper container (components 1 and 2), with the upper ends of the duct coinciding with the end of the lid of the container. This fit can be obtained by pressure, gluing, screwing or manufacture (in which both components are made of one single piece).

There should be a removable joint between the upper and lower containers (components 2 and 3) to allow them to be easily separated and each of them to be handled independently. The fit can be achieved simply by wedging them together (as represented in the figure), but can also be fastened or screwed together. Once the upper and lower containers (components 2 and 3) are joined together, a free space should remain between the ends of both containers.

Figures 4 and 5 represent a frontal section and top plan view, respectively, of the trap resulting from joining together the three components, all of which have been represented with circular sections, but can also have another geometrical shape.

The solid fit between the vertical duct and the upper container will be located around the perimeter where the duct meets the base of the container (15), making the upper ends of the vertical duct coincide with the lid of the upper container. When the upper and lower containers are joined together, a free space should remain between the ends of both containers.

Figure 6 represents an isometric of the trap resulting from joining together the three components.

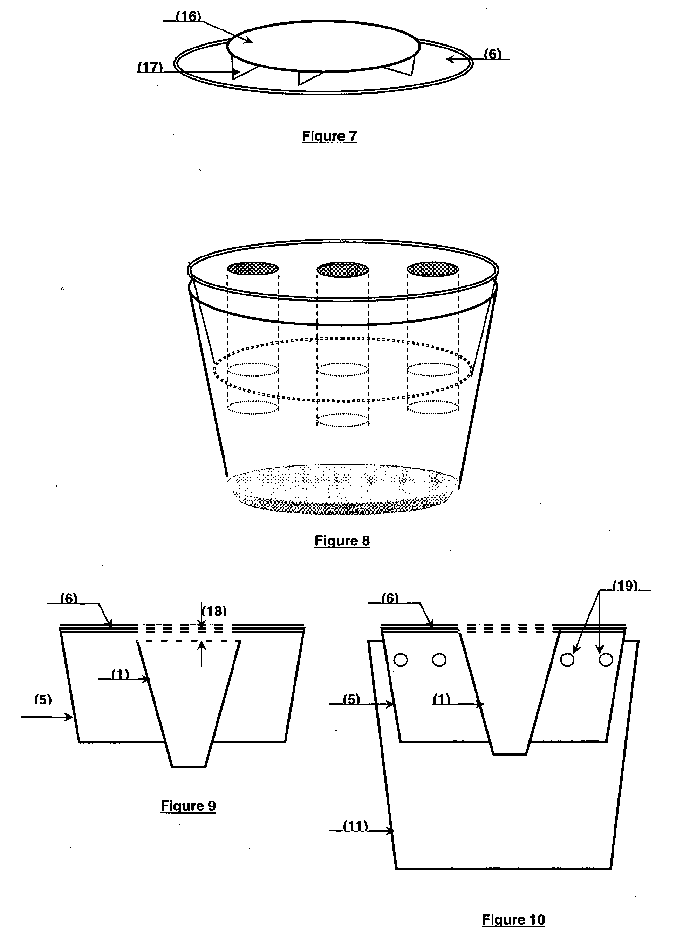

### Variations: Alternatives to the model (Figures 7, 8, 9, 10, 11 and 12)

The proposed invention may be subject to the introduction of certain variations in order to enhance its functionality or simplify its construction. Following is a description of these variations, that can be incorporated independently one from another:
- **Additional top**: An additional top can be added to the lid of the upper container, joined together solidly by means of support structures, and leaving sufficient space to allow the insects to move around freely. Although this concept cannot be considered an invention, because it is present in many existing traps, it contributes to the functionality of the trap because it prevents water entering in the event of rain and protects the insects against the wind, making it easier for them to enter the trap.

Figure 7 represents an isometric of the lid of the upper container (6) with the additional top incorporated (16), joined together by support structures (17).
- **Multiple ducts**: The vertical ducts interconnecting the upper container with the lower one can be more than one, maintaining the characteristics described for this element (component 1). Although this concept cannot be considered an invention, because there are many traps with multiple access ducts, it contributes to the functionality of the trap because it allows the simultaneous entry of several insects at a time, improving the efficiency of the trap.

Figure 8 represents an isometric of the trap with several entry ducts.
- **Alternatives for releasing the attractive scent**: In order to allow the scent of the lure to be released toward the exterior of the trap, the invention proposes perforating or slotting the vertical duct. There are, however, other alternatives that can be advantageous from a constructive point of view. One of them is to leave a space between the lower end of the lid and the upper end of the duct; this is equivalent to leaving a slot along the entire perimeter of the upper section of the duct, without need to alter its surface. Another alternative is to perforate or slot the upper part of the wall of the upper container, because the scent would equally circulate from the upper container to the lower one, and from there toward the exterior through the vertical duct.

In either of the two cases, the thickness or diameter of the slots and/or perforations should not allow insects to pass through them.

Figure 9 represents a cross-section of the trap that shows the upper container (5), with its lid (6) and the vertical duct (1). The elements are joined together in such a way that a space (18) remains between the lower end of the lid and the upper end of the duct.

Figure 10 represents a cross-section of the trap that shows the upper container (5), with its lid (6), the vertical duct (1) and the lower container (11). In this case the slots or perforations (19) are located in the upper part of the walls of the upper container.
- **Regulation of perforations and slots**: To allow the scent of the lure to be released toward the exterior of the trap, the invention proposes perforating or slotting the vertical duct. In order to prevent insects having access to the lure, the size of the orifices should not allow insects to pass through. To allow greater flexibility for the trap to be used for insects of different sizes, it is possible to incorporate a device to graduate the size of the perforations or slots.
   In the event that the release of the scent occurs through perforations or slots in the upper part of a cylindrical or conical vertical duct, the device can consist of a ring that encircles the upper part of the duct, bearing perforations of the same geometrical form and distribution as the orifices of the duct. Thus, by rotating the ring in a circular motion, the size of the orifices can be graduated.
   In the event that the release of the scent occurs through a space between the lower end of the lid of the upper container and the upper end of the cylindrical vertical duct, the device can consist of a cylindrical ring that encircles the upper part of the duct. Thus, by moving the ring vertically, the size of the space for releasing the aroma can be graduated.

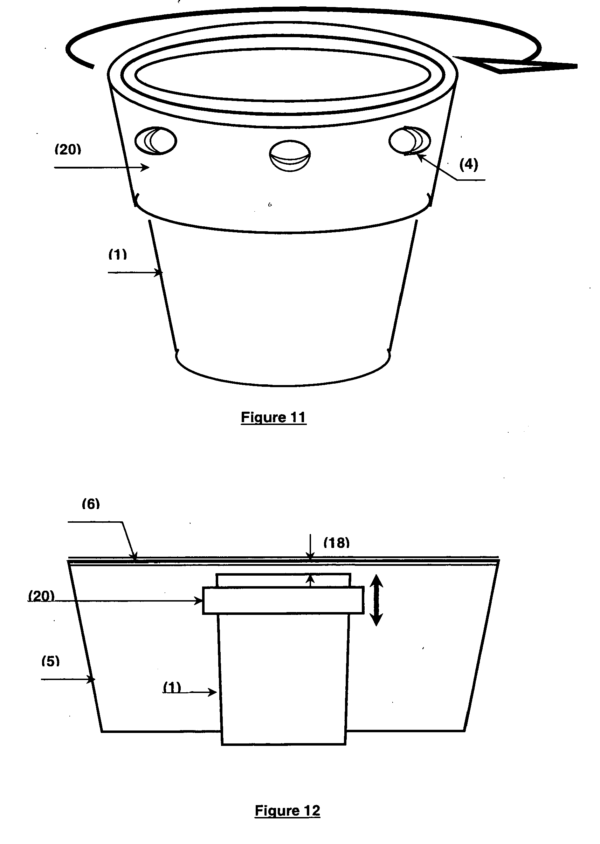

Figure 11 represents an isometric of the vertical duct (1), the upper end of which is perforated and encircled by a ring with perforations of the same geometrical shape and distribution of the orifices of the duct (20). By rotating the ring in a circular motion, it can graduate the size of the orifices (4).

Figure 12 represents a cross-section of the trap that shows the upper container (5), with its lid (6) and the conical vertical duct (1). The elements are joined together so that a space (18) remains between the lower end of the lid and the upper end of the duct to allow the release of the scent. The upper part of the duct is encircled by a ring (20) which when moved vertically makes it possible to graduate the size of the space intended for releasing the scent.

## Claims

1. A trap for capturing flying insects that provides in one single device the following functional advantages: flexibility of application, ease of operation and effectiveness of capture; wherein said trap is made up of three components: (a) a hollow vertical duct of conical or cylindrical shape and with a preferably circular section, that is perforated or slotted in its upper end; (b) an upper container of conical or cylindrical shape and with a preferably circular section, equipped with a lid; and (c) a lidless lower container, of conical or cylindrical shape and with a preferably circular section; said components are joined together so that the geometrical axis of the three components coincides and the vertical duct interconnects the upper container with the lower one, extending entirely through the upper container.

2. A trap for capturing flying insects as recited in claim 1, wherein the components of said trap are joined together as follows: (a) a solid (unmovable) joint between the vertical duct and the upper container around the perimeter where the duct meets the base of the container, so that the upper ends of the vertical duct coincide with the lid of the container; (b) a removable joint between the upper and lower containers, providing for a good fit between the two and leaving a space separating the ends of both containers.

3. A trap for capturing flying insects as recited in claim 1, wherein all the components of said trap are preferably made of plastic material, rigid or flexible, disposable or recyclable.

4. A trap for flying insects as recited in claim 1, wherein the vertical duct of said trap has the following characteristics: (a) a length equal to or greater than the height of the upper container; (b) the lengths of the orifices or slots in the upper part of the vertical duct are shorter than the height of the upper container; (c) the orifices or slots have a smaller diameter or thickness than the width of the insects intended to be captured; and (d) the upper interior section of the vertical duct is equal to or greater than the lower interior section, both allowing insects to pass through.

5. A trap for flying insects as recited in claim 1, wherein the upper container of said trap has a perforation in the centre of its lid with the same section as the upper exterior section of the vertical duct; and there is a perforation in the centre of the base of the upper container with the same section as the exterior of the vertical duct at the level of the upper container.

6. A trap for flying insects as recited in claim 1, wherein the lower container of said trap has an upper section that allows it to fit together with the upper container and is equipped with a loop handle allowing it to be suspended.

7. A trap for flying insects as recited in claim 5, wherein the lid of the upper container may have an additional top affixed to it by means of support structures, leaving sufficient space to allow the insects to move freely.

8. A trap for flying insects as recited in claims 1, 2, 3, 4 and 5, wherein the vertical ducts on said trap can be more than one.

9. A trap for flying insects as recited in claim 2, wherein the lower end of the lid of the upper container of said trap can be separated from the upper end of the vertical duct by a space that does not allow insects to pass through.

10. A trap for flying insects as recited in claim 5, wherein the upper part of the walls of the upper container of said trap can have slots or perforations with a thickness or diameter that prevents insects from passing through.

11. A trap for flying insects as recited in claim 4, wherein the upper part of the vertical duct of said trap is encircled by a ring that, when moved, makes it possible to graduate the size of the orifices or slots.
